**Europäisches Patentamt**

**European Patent Office**

**Office européen des brevets**

(19)

(11) Numéro de publication: **0 036 538**
**A1**

## (12) DEMANDE DE BREVET EUROPEEN

(21) Numéro de dépôt: **81101672.4**

(51) Int. Cl.³: **F 16 J 1/00**

(22) Date de dépôt: **09.03.81**

(30) Priorité: **14.03.80 FR 8005773**

(43) Date de publication de la demande: **30.09.81**
**Bulletin 81/39**

(84) Etats contractants désignés: **AT BE CH DE FR GB IT LI LU NL SE**

(71) Demandeur: **COMPAGNIE PARISIENNE D'OUTILLAGE A AIR COMPRIME Société anonyme dite:, 11bis, rue Roquépine, F-75008 Paris (FR)**

(72) Inventeur: **Andrieu, Robert, Château des Tours, Ayse F-74130 Bonneville (FR)**

(74) Mandataire: **Weinmiller, Jürgen et al, Zeppelinstrasse 63, D-8000 München 80 (DE)**

(54) **Piston de vérin.**

(57) Il comporte deux parties (1, 2) creuses assemblées suivant des faces (17, 27) disposées dans un plan diamétral, chacune desdites parties (1, 2) comportant sur sa face d'assemblage (17, 27) des dents (42) emboîtées dans des crans (43) de l'autre partie, ledit piston étant réalisé par moulage de matière thermo-plastique.

0036538

## Piston de vérin

L'invention est relative à un piston de vérin, comportant deux parties creuses et assemblées suivant des faces disposées dans un plan diamétral et réalisées par moulage de matière thermo-plastique.

L'invention s'applique, par exemple, aux vérins pneumatiques.

Dans de tels vérins, on utilise généralement des pistons métalliques, dont la fabrication nécessite un usinage et dont l'emploi conduit à l'utilisation de bagues rapportées pour leur guidage dans les cylindres ainsi qu'à un graissage du cylindre par lubrification du fluide de travail. Il en résulte une fabrication longue et coûteuse et des sujétions d'exploitation.

On connaît en outre des pistons de vérin en matière plastique formés de deux parties présentant chacune un évidement, l'ensemble formant une cavité dans laquelle est disposé un disque d'acier apte à renforcer la tenue mécanique de l'ensemble, ou des rondelles tronconiques élastiques. Ces deux parties de piston peuvent être assemblées par une couronne de vis de serrage et bloquées au moyen de dés pénétrant dans des évidements ménagés sur la tige de commande du piston.

L'invention a pour but un piston dont la fabrication ne nécessite pas d'usinage et dont les contingences d'exploitation soient simplifiées.

L'invention a pour objet un piston de vérin, comportant deux parties creuses et assemblées suivant des faces disposées dans un plan diamétral et réalisées par moulage de matière thermo-plastique, caractérisé en ce que chacune des parties comporte sur sa face d'assemblage des dents emboîtées dans des crans de l'autre partie.

Selon un mode de réalisation avantageux de l'invention chacune des parties comporte sur sa périphérie des surfaces de guidage.

De préférence, une partie comporte sur sa périphérie des excavations servant de réserve de graisse. Le piston comporte avantageusement sur sa périphérie au droit des faces d'assemblage une rainure de graissage. Le piston peut aussi comporter une cavité interne servant de réserve de graisse et communiquant avec la périphérie par des canaux de graissage.

Le piston est de préférence muni d'une bague magnétique qui peut être de la plasto-ferrite. La bague magnétique peut être disposée dans une cavité interne.

Les deux parties du vérin peuvent être réalisées à l'aide de pièces identiques.

L'invention sera décrite ci-après plus en détail à l'aide d'un mode de réalisation donné à titre d'exemple et illustré dans les dessins.

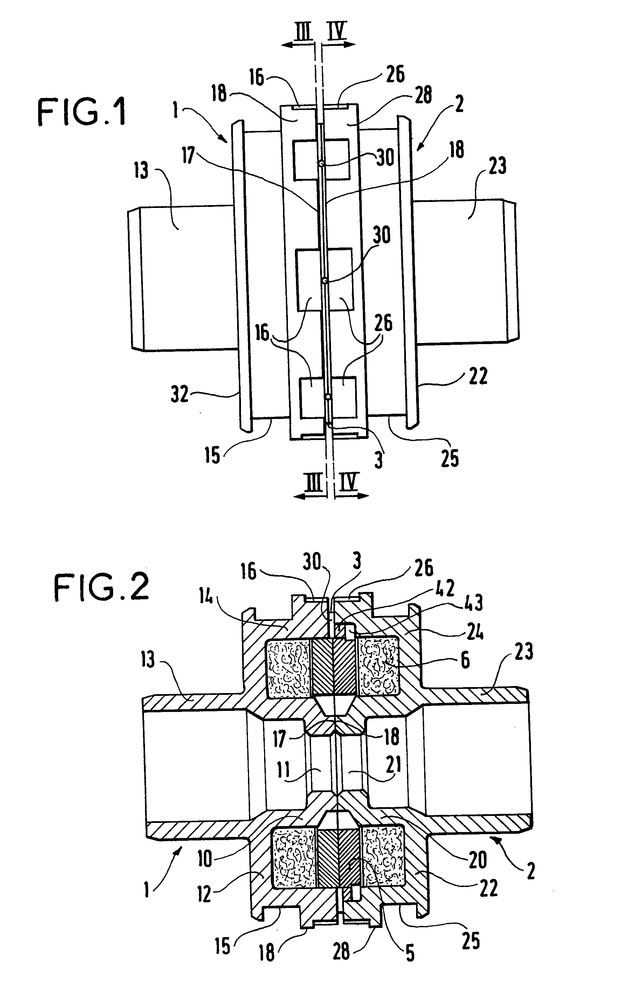

La figure 1 est une vue de face d'un piston selon l'invention.

La figure 2 est une vue en coupe suivant un axe longitudinal du piston selon la figure 1.

La figure 3 est une vue suivant III-III du piston selon la figure 1 dans lequel la bague et la graisse ont été retirées.

La figure 4 est une vue suivant IV-IV du piston selon la figure 1 dans lequel la bague et la graisse ont été retirées.

Le piston représenté sur les figures est constitué de deux parties 1, 2 assemblées entre elles selon un plan diamétral. Chacune des deux parties 1 et 2 comporte dans sa partie centrale un moyeu 10 et 20 délimitant un orifice longitudinal 11 et 21 destiné à l'assujétissement d'une tige de manoeuvre non représentée.

Les moyeux 10 et 20 présentent sur des faces antérieures 12 et 22, qui constituent les faces actives du piston, des bagues d'amortissement classiques 13 et 23.

Des couronnes périphériques 14 et 24 prennent appui sur les faces antérieures 12 et 22. Chacune des couronnes 14 et 24 comporte une rainure circulaire 15 et 25 destinée au logement d'une bague d'étanchéité. En outre la périphérie des couronnes 14 et 24 constitue des surfaces circulaires de guidage 18 et 28 qui comportent une série d'excavations 16 et 26 débouchant dans une rainure circulaire 3 formée entre les faces d'assemblages 17 et 27 des parties 1 et 2. Chacune des parties 1 et 2 comporte entre les moyeux 10 et 20, les couronnes 14 et 24 et les faces antérieures 12 et 22, une cavité intérieure 4 débouchant sur les faces d'assemblage 17 et 27.

La cavité 4 sert de logement à des bagues magnétiques 5, telles que de la plasto-ferrite, destinées à influencer des détecteurs magnétiques, non représentés, et extérieurs au cylindre du vérin dans lequel le piston doit être utilisé. La cavité 4 sert aussi de réservoir de graisse 6 relié à cet effet à la rainure 3 par des canaux radiaux 30.

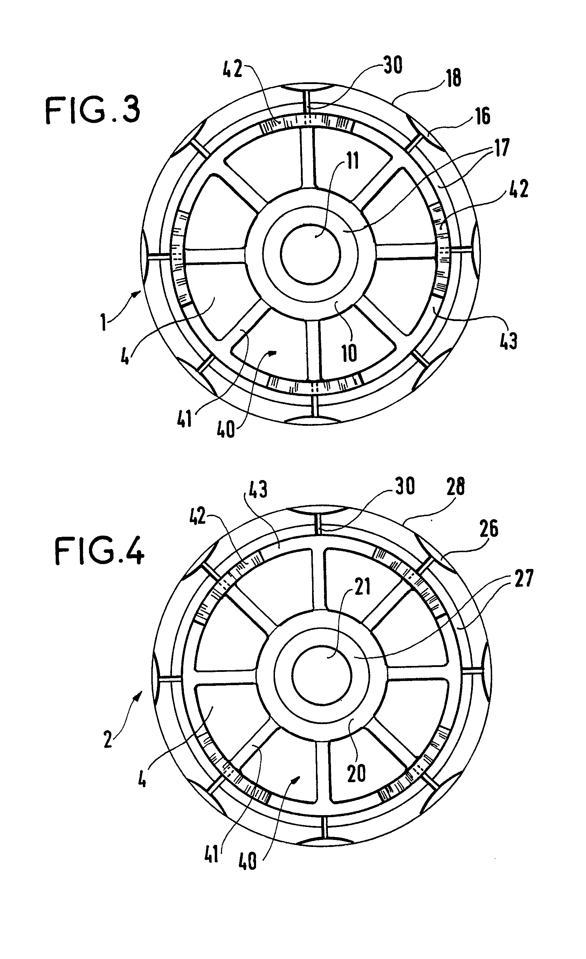

Dans les figures 3 et 4, on a retiré les bagues 5 et la graisse 6 pour laisser apparaître la configuration de chacune des cavités 4. Celles-ci sont formées d'alvéoles élémentaires 40 séparés par des bras radiaux 41.

D'autre part, chacune des parties 1 et 2 comporte, réparties sur leurs faces d'assemblage 17 et 27, des dents 42 alternant avec des crans 43.

Les dents 42 et les crans 43 de la partie 1 sont décalés par rapport à ceux de la partie 2, de telle sorte que les dents d'une des parties peuvent s'emboîter dans les crans de l'autre partie pour réaliser l'ensemble du piston. Les canaux 30 peuvent d'ailleurs être constitués par un intervalle résiduel subsistant entre les dents 42 des deux parties 1 et 2.

Les parties 1 et 2 du piston ainsi décrites peuvent être réalisées aisément par moulage de matière thermo-plastique telle qu'un copolymère d'acétal. Les parties 1 et 2 étant identiques peuvent être obtenues avec un même moule.

Les avantages d'un tel piston sont les suivants.

- Le piston est très léger et peut être directement utilisé, après moulage, sans usinage complémentaire, car les surfaces de guidage 18 et 28 dispensent de l'utilisation de bagues de guidage dans le cylindre de travail.

- La présence de réserves de graissage dispense d'une lubrification du fluide de travail, ce qui permet de travailler, par exemple, en air sec non lubrifié.

- La présence de bagues magnétiques permet une détection magnétique de la position du piston.

REVENDICATIONS

1/ Piston de vérin, comportant deux parties (1, 2) creuses et assemblées suivant des faces (17, 27) disposées dans un plan diamétral et réalisées par moulage de matière thermo-plastique, caractérisé en ce que chacune des parties (1) comporte sur sa face d'assemblage (17, 27) des dents (42) emboîtées dans des crans (43) de l'autre partie (2).

2/ Piston selon la revendication 1, caractérisé en ce que chacune des parties (1, 2) comporte sur sa périphérie des surfaces de guidage (18, 28).

3/ Piston selon l'une des revendications 1 et 2, caractérisé en ce qu'une partie (1, 2) comporte sur sa périphérie des excavations (16, 26) servant de réserve de graisse.

4/ Piston selon l'une des revendications 1 à 3, caractérisé en ce qu'il comporte sur sa périphérie au droit des faces d'assemblages (17, 27) une rainure (3) de graissage.

5/ Piston selon l'une des revendications 1 à 4, caractérisé en ce qu'il comporte une cavité interne (4) servant de réserve de graisse (6) et communiquant avec la périphérie par des canaux (30) de graissage.

6/ Piston selon l'une des revendications 1 à 5, caractérisé en ce qu'il est muni d'une bague magnétique (5).

7/ Piston selon la revendication 6, caractérisé en ce que la bague magnétique (5) est disposée dans une cavité interne (4).

8/ Piston selon la revendication 6, caractérisé en ce que la bague magnétique (5) est de la plasto-ferrite.

9/ Piston selon l'une des revendications 1 à 8, caractérisé en ce que les deux parties (1, 2) sont identiques.

FIG.1

FIG.2

FIG.3

FIG.4

Office européen
des brevets

**RAPPORT DE RECHERCHE EUROPEENNE**

0036538

Numéro de la demande

EP 81 10 1672

| Catégorie | Citation du document avec indication, en cas de besoin, des parties pertinentes | Revendication concernée |
|---|---|---|
| X | US - A - 1 773 402 (MILLER)<br>  * Page 1, lignes 62-67; figures 1-6 *<br>  -- | 1 |
| | FR - A - 2 358 595 (FESTO)<br>  * Page 6, ligne 19 - page 10, ligne 40; figures 4-7 *<br>  -- | 1-5,9 |
| | FR - A - 2 370 907 (FESTO)<br>  * Page 1, ligne 10 - page 3, ligne 37; figures 1,2 *<br>  -- | 1,6,8 |
| | DE - A - 2 917 232 (HYDRO-PNEUMATIC)<br>  * Page 3, paragraphe 3 - page 4, paragraphe 1; page 6, paragraphe 3 - page 10, paragraphe 1; figures 1,3 *<br>  ---- | 1,6,8 |

**DOCUMENTS CONSIDERES COMME PERTINENTS**

**CLASSEMENT DE LA DEMANDE (Int. Cl.³)**

F 16 J 1/00

**DOMAINES TECHNIQUES RECHERCHES (Int. Cl.³)**

F 16 J
F 15 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 30-06-1981 | LEGER |

OEB Form 1503.1 06.78